# EUROPEAN PATENT SPECIFICATION

(11) **EP 3 944 711 B1**
(45) Date of publication and mention of the grant of the patent: **05.08.2026**
(21) Application number: 19920556.8
(22) Date of filing: 19.03.2019
(51) Int. Cl.: H04W 74/0833, H04W 4/40, H04W 92/18

(54) **COMMUNICATION DEVICE AND COMMUNICATION METHOD**
KOMMUNIKATIONSVORRICHTUNG UND KOMMUNIKATIONSVERFAHREN
DISPOSITIF DE COMMUNICATION ET PROCÉDÉ DE COMMUNICATION

(43) Date of publication of application: 26.01.2022
(60) Divisional application: 26184696.8
(73) Proprietor: NTT DOCOMO, INC., Chiyoda-Ku Tokyo 100-6150 (JP)
(72) Inventor: YOSHIOKA, Shohei, Tokyo 100-6150 (JP); NAGATA, Satoshi, Tokyo 100-6150 (JP); WANG, Huan, Beijing, 100190 (CN); HOU, Xiaolin, Beijing, 100190 (CN)
(74) Representative: Hoffmann Eitle
(86) International application number: PCT/JP2019/011574
(87) International publication number: WO 2020/188773

(56) References cited:
- US-A1- 2014 321 452
- US-A1- 2014 321 452
- US-A1- 2016 205 714
- US-A1- 2016 205 714

## Description

### TECHNICAL FIELD

The present invention relates to a communication apparatus and a communication method in a radio communication system.

### BACKGROUND ART

In Long Term Evolution (LTE), successor systems of LTE (for example, LTE Advanced (LTE-A), and New Radio (NR) (also called 5G)), technology of sidelink (device to device (D2D)) has been studied in which communication apparatuses, such as a user equipment (UE), perform communication directly with each other without going through a base station (for example, Non-Patent Document 1).

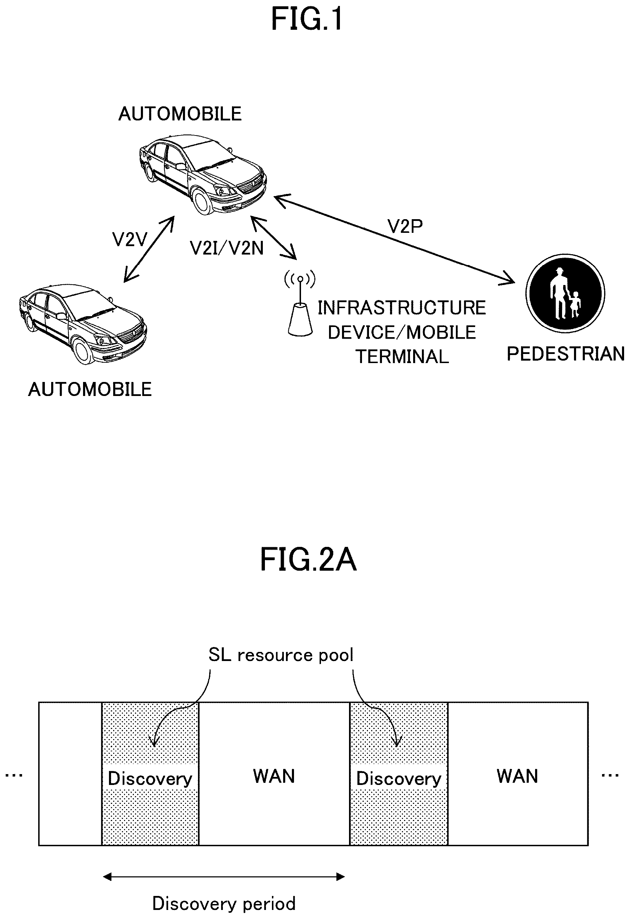

Furthermore, implementation of vehicle to everything (V2X) has been studied, and a specification has been developed. Here, V2X is a part of intelligent transport systems (ITS) and is a generic term of vehicle to vehicle (V2V) meaning a communication mode performed between vehicles, vehicle to infrastructure (V2I) meaning a communication mode performed between a vehicle and a roadside unit (RSU) installed on a road side, vehicle to nomadic device (V2N) meaning a communication mode performed between a vehicle and a mobile terminal of a driver, and vehicle to pedestrian (V2P) meaning a communication mode performed between a vehicle and a mobile terminal of a pedestrian as illustrated in Fig. 1.
Patent Document 1 relates to a mobile communication system comprising a first user terminal having a scheduling function of assigning a radio resource used for the D2D communication. Patent Document 2 relates to methods for efficiently performing device to device synchronization and device identification in a device communication system, and devices for supporting the methods.

### Related Art Document

### [Patent Document]

Patent Document 1: US 2016/205714 A1
Patent Document 2: US 2014/321452 A1

### [Non-Patent Document]

Non-Patent Document 1: 3GPP TS 38.213 V15.4.0 (2018-12)
Non-Patent Document 2: 3GPP TS 38.211 V15.4.0 (2018-12)
Non-Patent Document 3: 3GPP TS 38.331 V15.4.0 (2018-12)

### SUMMARY OF THE INVENTION

### [PROBLEM TO BE SOLVED BY THE INVENTION]

It has been proposed, as one of NR-V2X sidelink transmission modes, that a header user equipment performs scheduling of a member user equipment in a user equipment group including the header user equipment and the member user equipment. The above-described transmission mode may be referred to as a sidelink transmission mode 2-d, or the above-described transmission mode may have a different name. Furthermore, the header user equipment may be referred to as a scheduling user equipment, and the member user equipment may be referred to as a non-header user equipment, a non-scheduling user equipment, or the like. As an architecture for implementing the sidelink transmission mode 2-d, UE-scheduling based resource allocation has been proposed, as described below.
(1) Determine a header-UE (i.e., a scheduling communication apparatus).
(2) Associate member UEs (i.e., member communication apparatuses) with the header-UE (i.e., formulation of a UE group).
(3) Determine resource(s)/resource set(s) that can be used per UE group. Orthogonal resource set can be assigned to proximity-UE-groups to mitigate inter-group resource interference.
(4) The header-UE schedules resource within its assigned resource set to member-UE. Independent scheduling is assumed per header-UE and scheduler algorithm is up to UE implementation. A procedure is assumed to be adopted such that the member-UE transmits a sidelink scheduling request, and the header-UE transmits a notification of information indicating the scheduled resource.

As a basic method for associating a scheduling communication apparatus with member communication apparatuses, a method can be considered to define a sidelink random access procedure by applying a random access procedure for Uu (an interface between a user equipment and a base station) specified in LTE and NR to sidelink communication. In this case, contention between sidelink random access preambles may occur. There is a need for resolving contention when the contention between sidelink random access preambles occurs.

### [MEANS FOR SOLVING THE PROBLEM]

The present invention is defined by the independent claims. Preferred embodiments are defined by the dependent claims. Further examples are provided for facilitating the understanding of the invention. According to an aspect of the present invention, there is provided a communication apparatus including a transmitting unit that transmits a random access preamble via sidelink; a receiving unit that receives a plurality of signals via the sidelink, wherein each signal of the plurality of signals includes identification information of a communication apparatus that receives the random access preamble; and a control unit that selects, from among the identification information of the plurality of communication apparatuses included in the plurality of signals, identification information of a communication apparatus to be associated with, wherein the plurality of signals is received in an additional procedure in a sidelink random access procedure other than a procedure of receiving a random access response via the sidelink and a procedure of receiving a Message4 via the sidelink.

### [ADVANTAGE OF THE INVENTION]

According to an embodiment, a technique is provided for solving contention when the contention between sidelink random access preambles occurs.

### BRIEF DESCRIPTION OF DRAWINGS

Fig. 1 is a diagram for illustrating V2X;
Fig. 2A is a diagram for illustrating sidelink;
Fig. 2B is a diagram for illustrating sidelink;
Fig. 3 is a diagram for illustrating a MAC PDU used for sidelink communication;
Fig. 4 is a diagram for illustrating a format of an SL-SCH subheader;
Fig. 5 is a diagram for illustrating an example of a channel structure used in LTE-V2X sidelink;
Fig. 6 is a diagram indicating a configuration example of a radio communication system according to an embodiment;
Fig. 7 is a diagram for illustrating a resource selection operation of a communication apparatus;
Fig. 8A is a diagram illustrating an outline of SL transmission mode 1 specified in NR V2X;
Fig. 8B is a diagram illustrating an outline of SL transmission mode 2a;
Fig. 8C is a diagram illustrating an outline of SL transmission mode 2c;
Fig. 8D is a diagram illustrating an outline of SL transmission mode 2d;
Fig. 9A is a diagram illustrating an example of a unicast PSCCH/PSSCH transmission;
Fig. 9B is a diagram illustrating an example of a groupcast PSCCH/PSSCH transmission;
Fig. 9C is a diagram illustrating an example of a broadcast PSCCH/PSSCH transmission;
Fig. 10 is a diagram illustrating an example in which a header UE schedules sidelink communication to a member UE;
Fig. 11 is a diagram illustrating an example of a random access procedure for sidelink communication in mode 2(d);
Fig. 12 is a diagram illustrating an example in which the same preamble set is used for two scheduling communication apparatuses adjacent to each other;
Fig. 13 is a diagram illustrating an example of a method of Option 1;
Fig. 14 is a diagram illustrating an example of a method of Option 2;
Fig. 15 is a diagram illustrating an example in which a member communication apparatus selects a scheduling communication apparatus to be associated with;
Fig. 16 is a diagram illustrating an example of a functional configuration of a base station according to an embodiment;
Fig. 17 is a diagram illustrating an example of a functional configuration of a communication apparatus according to an embodiment; and
Fig. 18 is a diagram illustrating an example of a hardware configuration of the base station and the communication apparatus according to an embodiment.

### [EMBODIMENTS OF THE INVENTION]

Hereinafter, embodiments of the present invention are described with reference to the appended drawings. The embodiments described below are an example, and embodiments to which the present invention is applied are not limited to the following embodiments.

In the embodiments, it is assumed that a direct communication scheme between communication apparatuses is sidelink (SL) of LTE or NR, but the direct communication scheme is not limited to this scheme. Furthermore, the name "sidelink" is an example, and uplink (UL) may include a function of SL without using the name "sidelink." The SL may be distinguished from downlink (DL) or UL by a difference in a frequency or time resource or may be another name.

Furthermore, UL and SL may be distinguished by a difference of one or more combinations of a time resource, a frequency resource, a time/frequency resource, a reference signal to be referred to so as to determine a path loss in transmission power control, and a reference signals (PSS/SSS/PSSS/SSSS) used for synchronization.

For example, in UL, a reference signal of an antenna port X is used as the reference signal to be referred to so as to determine the path loss in the transmission power control, and in SL (including UL used as SL), a reference signal of an antenna port Y is used as the reference signal to be referred to so as to determine the path loss in the transmission power control.

Furthermore, in the embodiments, a configuration in which a communication apparatus is installed in a vehicle is mainly assumed, but an embodiment of the present invention is not limited to this configuration. For example, a communication apparatus may be a terminal carried by a person, a communication apparatus may be a drone or a device installed in an aircraft, and a communication apparatus may be a base station, an RSU, a relay station (relay node), a user equipment provided with scheduling capability, or the like.

### (Overview of sidelink)

In the embodiment, since sidelink is a basic technique used here, first, an overview of sidelink is described as a basic example. An example of a technique described here is a technique specified in Rel. 14 of 3GPP or the like. This technique may be used in NR, or a technique different from this technique may be used in NR. A sidelink communication may be defined to be a direct communication performed among two or more neighboring units of user equipment by using E-UTRA technology, without going through a network node. A sidelink may be defined to be an interface between units of user equipment in a sidelink communication.

Sidelink is roughly divided into "discovery" and "communication." For "discovery," as illustrated in Fig. 2A, a discovery message resource pool is configured for each discovery period, and a communication apparatus (referred to as a UE) transmits a discovery message (discovery signal) within the resource pool. More specifically, there are Type 1 and Type 2b. In Type 1, a communication apparatus autonomously selects a transmission resource from the resource pool. In Type 2b, a quasi-static resource is allocated by higher layer signaling (for example, an RRC signal).

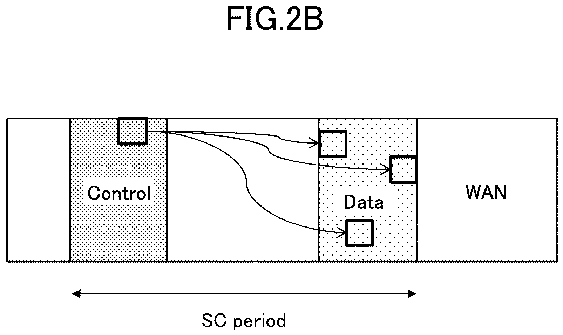

For "communication," as illustrated in Fig. 2B, a sidelink control information (SCI)/data transmission resource pool is periodically configured. A communication apparatus on a transmission side notifies a reception side of a data transmission resource (PSSCH resource pool) or the like through the SCI with the resource selected from the control resource pool (PSCCH resource pool), and transmits data with the data transmission resource. For "communication," in further detail, there are a mode 1 and a mode 2. In the mode 1, resources are dynamically allocated by an (enhanced) physical downlink control channel ((E) PDCCH) transmitted from a base station to a communication apparatus. In the mode 2, a communication apparatus autonomously selects a transmission resource from the resource pool. For example, the resource pool is provided by notification through SIB, for example, and is predefined.

In Rel-14, in addition to the mode 1 and the mode 2, there are a mode 3 and a mode **4. In** Rel-14, SCI and data can be transmitted simultaneously (in one sub frame) with resource blocks that are adjacent in a frequency direction. The SCI is also referred to as scheduling assignment (SA).

A channel used for "discovery" is referred to as a physical sidelink discovery channel (PSDCH), a channel for transmitting control information such as the SCI in "communication" is referred to as a physical sidelink control channel (PSCCH), and a channel for transmitting data is referred to as a physical sidelink shared channel (PSSCH). The PSCCH and the PSSCH have a PUSCH-based structure and have a structure in which a demodulation reference signal (DMRS) is inserted.

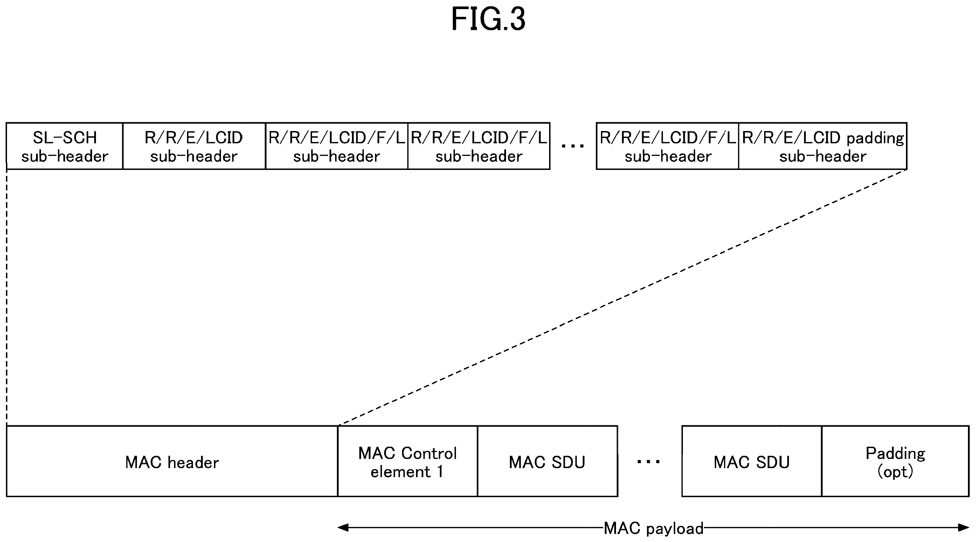

As illustrated in Fig. 3, a medium access control (MAC) protocol data unit (PDU) used for sidelink includes at least a MAC header, a MAC control element, a MAC service data unit (SDU), and padding. The MAC PDU may include other information. The MAC header includes one a sidelink shared channel (SL-SCH) subheader and one or more MAC PDU subheaders.

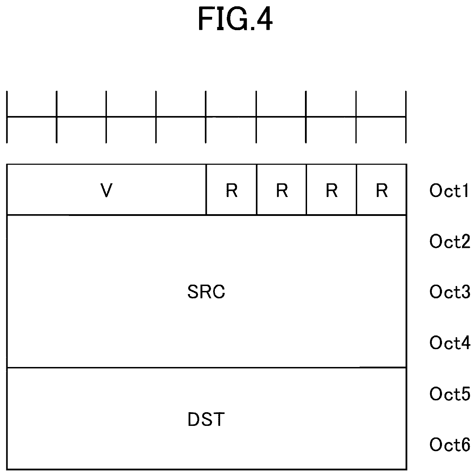

As illustrated in Fig. 4, the SL-SCH subheader includes a MAC PDU format version (V), transmission source information (SRC), transmission destination information (DST), reserved bits (R), and the like. V is allocated to the head of the SL-SCH subheader and indicates the MAC PDU format version used by the communication apparatus. Information related to a transmission source is configured in the transmission source information. An identifier related to a ProSe UE ID may be configured in the transmission source information. Information related to a transmission destination is configured in the transmission destination information. Information related to a ProSe Layer-2 Group ID of the transmission destination may be configured in the transmission destination information.

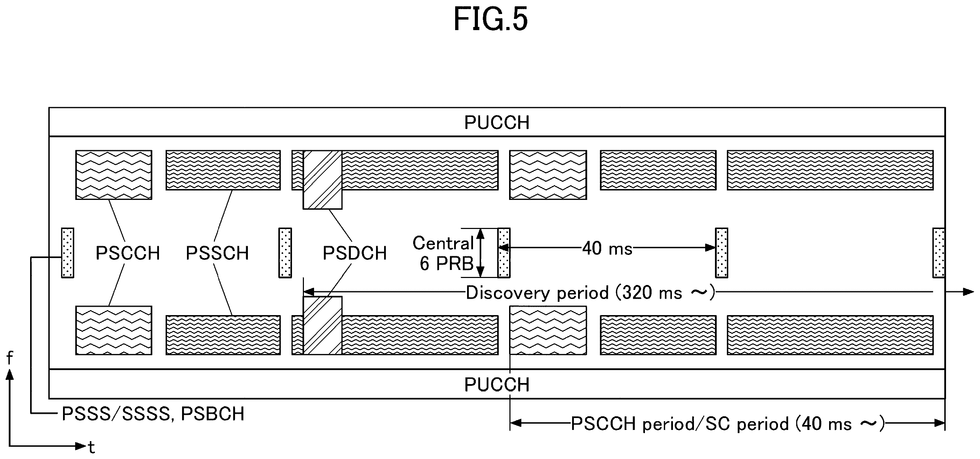

An example of a channel structure of LTE-V2X sidelink is illustrated in Fig. 5. As illustrated in Fig. 5, the resource pool of the PSCCH used for "communication" and the resource pool of the PSSCH are allocated. Furthermore, the resource pool of the PSDCH used for "discovery" is allocated at a period longer than a period of a channel of "communication." Note that the PSDCH need not be included for NR-V2X.

A Primary Sidelink Synchronization signal (PSSS) and a secondary sidelink synchronization signal (SSSS) are used as synchronization signals for sidelink. For example, a physical sidelink broadcast channel (PSBCH) for transmitting broadcast information such as a system band of sidelink, a frame number, and resource configuration information is used for an operation outside a coverage. The PSSS/SSSS and the PSBCH are transmitted, for example, in one sub frame. The PSSS/SSSS is also referred to as an SLSS.

V2X assumed in the embodiments is a scheme related to "communication." However, in the embodiments, there may be no distinction between "communication" and "discovery." Furthermore, the technology according to the embodiments may be applied in "discovery."

### (System configuration)

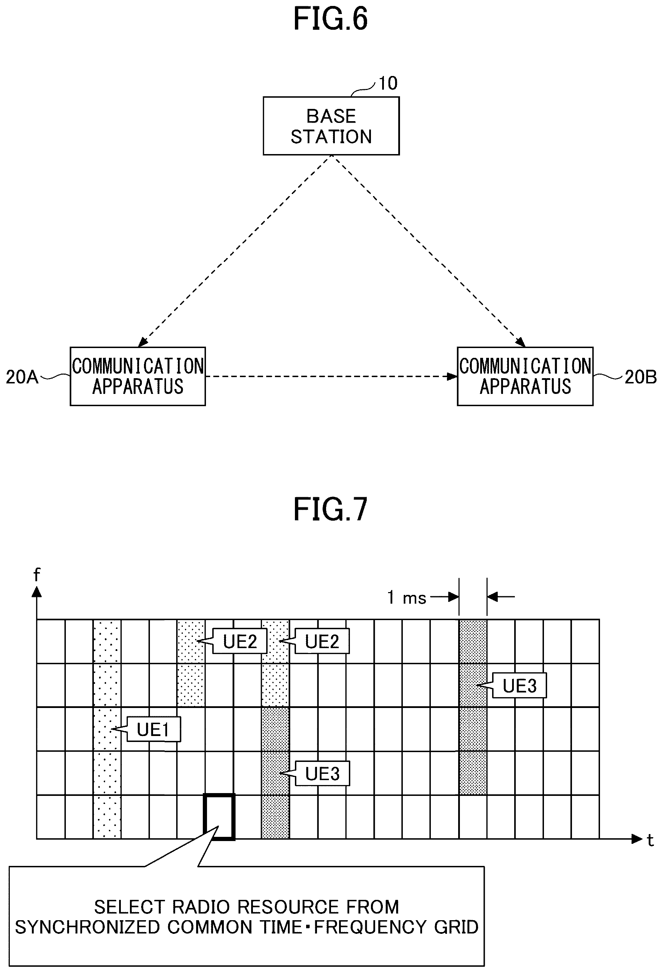

Fig. 6 is a diagram illustrating a configuration example of a radio communication system according to the embodiments. As illustrated in Fig. 6, the radio communication system according to the embodiments includes a base station 10, a communication apparatus 20A, and a communication apparatus 20B. Note that, actually, there may be many communication apparatuses, but Fig. 6 illustrates the communication apparatus 20A and the communication apparatus 20B as an example.

In Fig. 6, it is intended that the communication apparatus 20A is the transmission side, the communication apparatus 20B is the reception side, but both the communication apparatus 20A and the communication apparatus 20B have both the transmission function and the reception function. Hereinafter, when it is not necessary to particularly distinguish the communication apparatuses 20A and 20B, the are referred to simply as a "communication apparatus 20" or a "communication apparatus." Fig. 6 illustrates a case in which the communication apparatus 20A and the communication apparatus 20B are both in the coverage as an example, but an operation according to the embodiments can be applied to a case in which all the communication apparatuses 20 are within the coverage, a case in which some communication apparatuses 20 are within the coverage, and the other communication apparatuses 20 are outside the coverage, and a case in which all the communication apparatuses 20 are outside the coverage.

In the embodiments, the communication apparatus 20 is a device installed in a vehicle such as, for example, an automobile and has a cellular communication function as a UE in LTE or NR and a sidelink function. Furthermore, the communication apparatus 20 has a function of acquiring report information (position, event information, or the like) as in a GPS device, a camera, or various types of sensors. Furthermore, the communication apparatus 20 may be a general mobile terminal (such as a smartphone). Furthermore, the communication apparatus 20 may be an RSU. The RSU may be a UE type RSU having a function of a UE, a BS type RSU (which is also referred to as a gNB type UE) having a function of a base station, or a relay station.

The communication apparatus 20 need not be a device of one housing, and for example, even when various types of sensors are distributed and arranged in a vehicle, a device including various types of sensors is the communication apparatus 20. Furthermore, the communication apparatus 20 may have a function of performing transmission and reception of data with various types of sensors without including various types of sensors.

Furthermore, processing content of sidelink transmission of the communication apparatus 20 is basically similar to processing content of UL transmission in LTE or NR. For example, the communication apparatus 20 scrambles and modulates codewords of transmission data, generates complex-valued symbols, maps the complex-valued symbols (transmission signals) to one or two layers, and performs precoding. Then, the precoded complex-valued symbols are mapped to resource elements, and a transmission signal (for example, CP-OFDM or a DFT-s-OFDM) is generated and transmitted from each antenna port.

The base station 10 has a cellular communication function as a base station 10 in LTE or NR and a function (for example, resource pool configuring, resource allocation, and the like) for enabling communication of the communication apparatus 20 in the embodiments. Furthermore, the base station 10 may be an RSU (a gNB type RSU), a relay station, or a communication apparatus provided with a scheduling function.

Furthermore, in the radio communication system according to the embodiments, a signal waveform used for SL or UL by the communication apparatus 20 may be an OFDMA, an SC-FDMA, or any other signal waveform. Furthermore, in the radio communication system according to the embodiments, as an example, a frame including a plurality of sub frames (for example, 10 sub frames) is formed in a time direction, and it includes a plurality of subcarriers in a frequency direction. One sub frame is an example of one transmission time interval (TTI). Here, the TTI is not necessarily a sub frame. For example, the TTI may be a slot, a mini-slot, or any other unit in the time domain. Furthermore, the number of slots per sub frame may be determined in accordance with the subcarrier spacing. Furthermore, the number of symbols per slot may be 14 symbols.

In the embodiments, the communication apparatus 20 can operate in any mode among a mode 1 which is a mode in which resources are dynamically allocated by the ((enhanced) physical downlink control channel ((E) PDCCH) transmitted from the base station 10 to the communication apparatus, a mode 2 which is a mode in which the communication apparatus autonomously selects a transmission resource from a resource pool, a mode in which resource for SL signal transmission is allocated from the base station 10 (hereinafter referred to as a mode 3), and a mode in which a resource for SL signal transmission is autonomously selected (hereinafter referred to as a mode 4). The mode is configured, for example, in the communication apparatus 20 from the base station 10.

As illustrated in Fig. 7, the communication apparatus of the mode 4 (indicated by a UE in Fig. 7) selects a radio resource from a synchronized common time/frequency grid. For example, the communication apparatus 20 performs sensing in the background, specifies resources which have a good sensing result and are not reserved for other communication apparatuses as candidate resources, and selects a resource to be used for transmission from the candidate resources.

### (Overview of NR V2X)

In NR V2X, transmission modes are specified that are the same as SL transmission mode 3 and SL transmission mode 4 that are specified in LTE V2X.

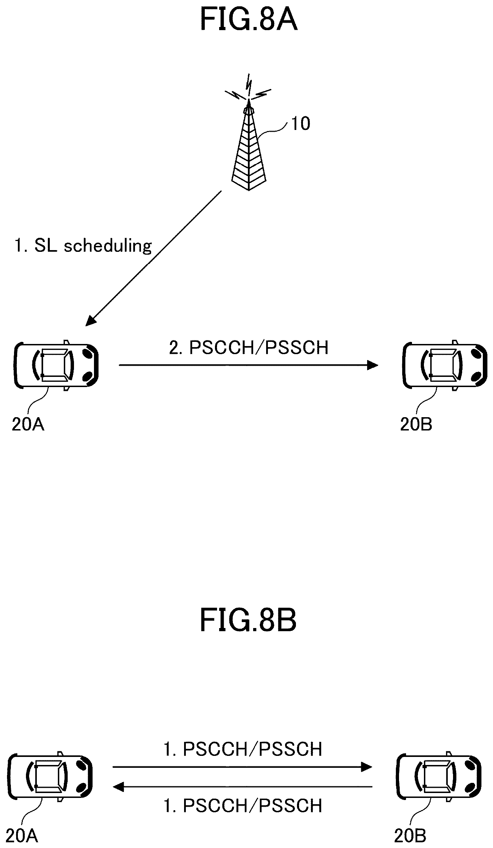

In the following, an outline of transmission modes defined by NR V2X is described with reference to FIG. 8A to FIG. 8D.

FIG. 8A is a diagram illustrating an overview of SL transmission mode 1 specified in NR V2X. SL transmission mode 1 specified in NR V2X corresponds to SL transmission mode 3 specified in LTE V2X. In the SL transmission mode 1 specified in NR V2X, the base station 10 schedules a transmission resource and assigns the transmission resource to the transmitting communication apparatus 20A. The communication apparatus 20A transmits a signal to the receiving communication apparatus 20B by using the assigned transmission resource.

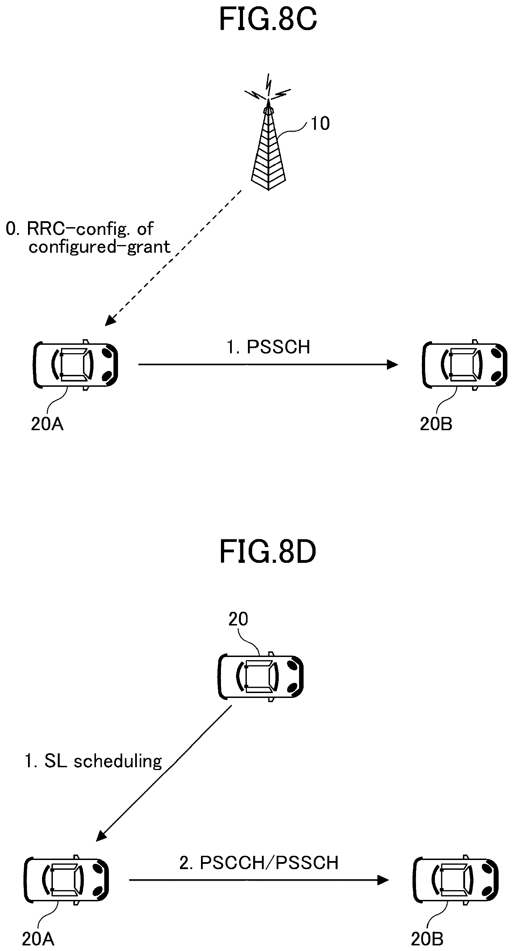

FIG. 8B, FIG. 8C and FIG. 8D are diagrams illustrating an overview of SL transmission mode 2 as specified in NR V2X. SL transmission mode 2 specified in NR V2X corresponds to SL transmission mode 4 specified in LTE V2X.

FIG. 8B is a diagram illustrating an overview of SL transmission mode 2a. In SL transmission mode 2a, for example, the transmitting communication apparatus 20A autonomously selects a transmission resource and transmits a signal to the receiving communication apparatus 20B by using the selected transmission resource.

FIG. 8C is a diagram illustrating an outline of SL transmission mode 2c. In the SL transmission mode 2c, for example, the base station 10 preconfigures transmitting resources with a certain period to the communication apparatus 20A , and the communication apparatus 20A transmits a signal to the receiving communication apparatus 20B by using the transmitting resources with the predetermined period. Here, instead of the base station 10 preconfiguring the transmitting resources with the certain period to the communication apparatus 20A, for example, the transmitting resources with the certain period may be configured to the communication apparatus 20A according to a specification.

FIG. 8D is a diagram illustrating an overview of SL transmission mode 2d. In SL transmission mode 2d, for example, the communication apparatus 20 performs an operation that is the same as an operation of the base station 10. Specifically, the communication apparatus 20 schedules transmission resources and assigns the transmission resources to the transmitting communication apparatus 20A. The communication apparatus 20A may perform a transmission to a receiving communication apparatus 20B by using the assigned communication resources. Namely, the communication apparatus 20 may control a transmission by another communication apparatus 20.

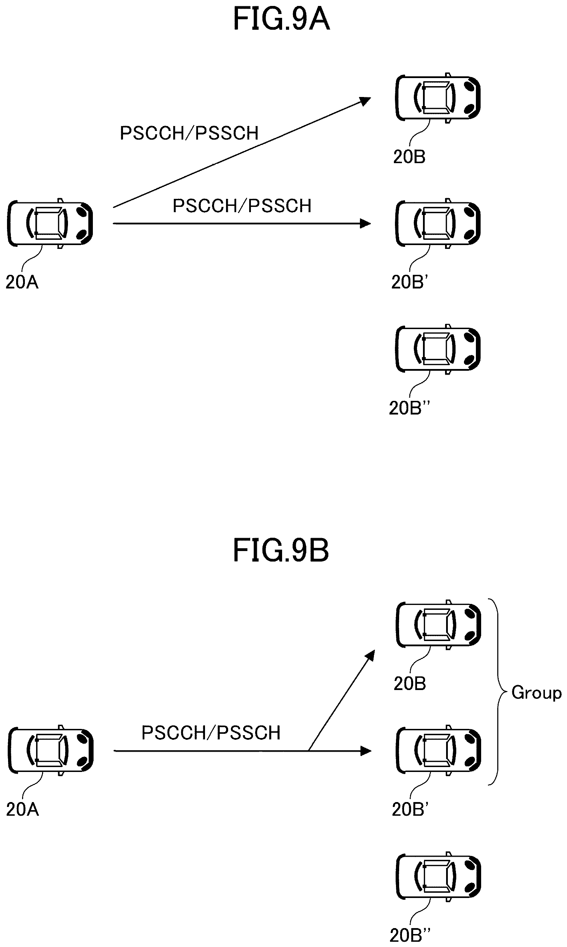

In the NR, as illustrated in FIG. 9A through FIG. 9C, three communication types, which are unicast, groupcast, and broadcast, are currently studied, as types of communication.

FIG. 9A is a diagram illustrating an example of unicast Physical Sidelink Shared Channel (PSCCH)/Physical Sidelink Control Channel (PSSCH) transmission. Unicast refers, for example, to a one-to-one transmission from the transmitting communication apparatus 20A to the receiving communication apparatus 20B.

FIG. 9B is a diagram illustrating an example of group cast PSCCH/PSSCH transmission. A group cast, for example, refers to a transmission from the transmitting communication apparatus 20A to the communication apparatus 20B and a receiving communication apparatus 20B', which are a group of the receiving communication apparatuses 20.

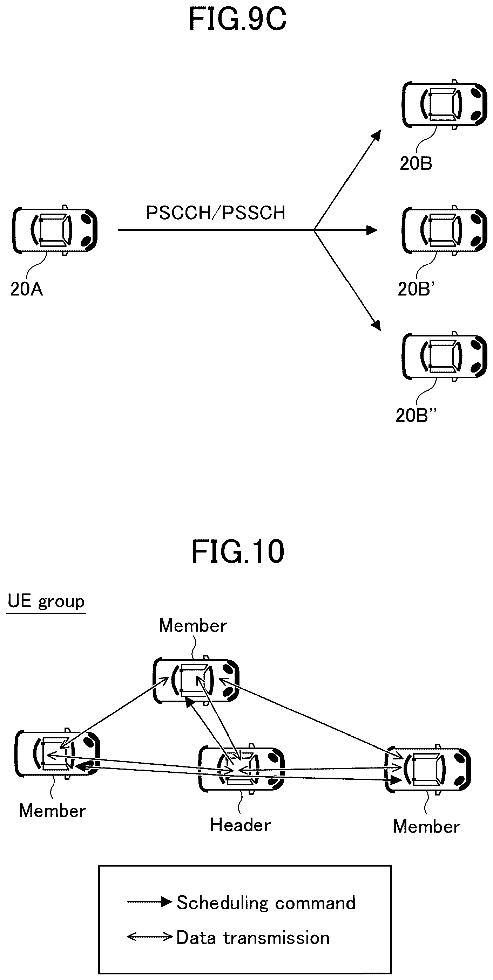

FIG. 9C is a diagram illustrating an example of a broadcast PSCCH/PSSCH transmission. Broadcast refers, for example, to a transmission from the transmitting communication apparatus 20A to the communication apparatus 20B, the communication apparatus 20B', and a communication apparatus 20B" which are all the receiving communication apparatuses 20 within a predetermined range.

It has been proposed, as one of NR-V2X sidelink transmission modes, that a header user equipment performs scheduling of a member user equipment in a user equipment group including the header user equipment and the member user equipment. The above-described transmission mode may be referred to as a sidelink transmission mode 2-d, or the above-described transmission mode may have a different name. Furthermore, the header user equipment may be referred to as a scheduling user equipment, and the member user equipment may be referred to as a non-header user equipment, a non-scheduling user equipment, or the like. As an architecture for implementing the sidelink transmission mode 2-d, UE-scheduling based resource allocation has been proposed, as described below.
(1) Determine a header-UE.
(2) Associate member UEs (i.e., member communication apparatuses) with the header-UE (e.g., form a UE group).
(3) Determine resource(s)/resource set(s) that can be used per UE group. Orthogonal resource set can be assigned to proximity-UE-groups to mitigate inter-group resource interference.
(4) The header-UE schedules resource within its assigned resource set to member-UE. Independent scheduling is assumed per header-UE and scheduler algorithm is up to UE implementation. A procedure is assumed to be adopted such that the member-UE transmits a sidelink scheduling request, and the header-UE transmits a notification of information indicating a resource scheduled by the header-UE.

Fig. 10 is a diagram illustrating an example in which the header UE schedules sidelink communication for the member UE. Here, in the example illustrated in Fig. 8D, the header UE may be the communication apparatus 20 that transmits the scheduling information of SL. Hereinafter, for the convenience of the description, in the example illustrated in Fig. 8D, the communication apparatus 20 that transmits the SL scheduling information is referred to as a scheduling communication apparatus 20. The communication apparatus 20 other than the scheduling communication apparatus 20 in the example of Fig. 8D is referred to as a member communication apparatus 20. Here, the scheduling communication apparatus 20 may perform the scheduling, or the scheduling communication apparatus 20 need not perform the scheduling. For example, the scheduling communication apparatus 20 may receive, from the base station 10, information indicating the configuration of the resource pool that is configured by the base station 10, and the scheduling communication apparatus 20 may transmit a notification of the information indicating the configuration of the resource pool to another communication apparatus 20. Accordingly, the communication apparatus 20 that transmits the SL scheduling information illustrated in Fig. 8D may be referred to as a relay device. Alternatively, the communication apparatus 20 that transmits the SL scheduling information illustrated in Fig. 8D may be a user equipment configured with a specific parameter by higher layer.

In the above-described architecture, currently, it is not clear how to establish the association between the scheduling communication apparatus 20 (the header-UE) with the member communication apparatus 20 (the member-UE) in (2). It is necessary to specify a method of associating a scheduling communication apparatus 20 with a member communication apparatus 20.

### (Basic Resolution Method)

As a basic method of associating the scheduling communication apparatus 20 with the member communication apparatus 20, a method can be considered such that a sidelink random access procedure is defined by applying a random access procedure for Uu (the interface between the user equipment and the base station) specified in LTE or NR to sidelink communication.

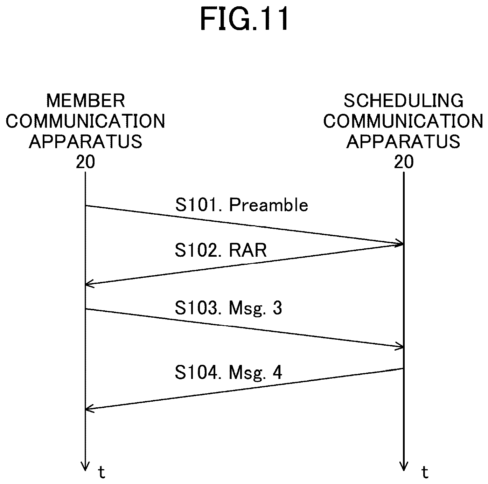

Fig. 11 is a diagram illustrating an example of the random access procedure of the sidelink communication, in the SL transmission mode 2d that is specified in the NR V2X.

First, in Step S101, the member communication apparatus 20 (a UE searching for the scheduling communication apparatus 20) transmits a random access preamble to the scheduling communication apparatus 20 via the sidelink. In such a case, the member communication apparatus 20 may autonomously select a preamble (a preamble sequence) from a plurality of preambles generated based on the information of the scheduling communication apparatus 20 that may be associated (for example, identification information (Identification: ID) of the scheduling communication apparatus 20). Note that, the random access preamble described above, for example, may be a connection request signal, or may have another name.

Next, the scheduling communication apparatus 20 transmits a random access response (RAR) to the member communication apparatus 20 through the physical sidelink control channel (PSCCH), in response to the reception of the random access preamble (Step S102). In the RAR, sidelink control information (SCI) that is scrambled by using a random access radio network temporary identifier (RA-RNTI) including information for specifying a resource for transmitting a signal of the physical sidelink shared channel (PSSCH) is included. Note that, the RAR described above, for example, may be a connection request response signal, or may have another name.

Next, the member communication apparatus 20 transmits Message3 to the scheduling communication apparatus 20 by using the resource of the PSSCH specified by the RAR received in Step S102 (Step S103). Subsequently, the member communication apparatus 20 receives Message4 that is a contention resolution message transmitted from the scheduling communication apparatus 20 through the PSSCH (Step S104). Note that, the Message3 described above, for example, may be replaced with the PSSCH scheduled by the PSCCH that is scrambled by specific RNTI (for example, SL-RAR-V-RNTI), or may have another name. In addition, the Message4 described above, for example, may be replaced with the PSCCH that is scrambled with the specific RNTI and/or the PSSCH that is assigned by the PSCCH, or may have another name.

It is assumed that the preamble that is transmitted in Step S101 described above is orthogonal between the adjacent UE groups, in principle. However, the number of orthogonal resources is limited, and thus, there is a possibility that the sidelink random access preamble to be transmitted is not orthogonal to the adjacent scheduling communication apparatus 20. For example, in a case where the sidelink random access preamble is generated only based on 8 bits on the tail end of the ID of the scheduling communication apparatus 20, the same preamble set may be used for two adjacent scheduling communication apparatuses 20, even if the IDs of two adjacent scheduling communication apparatuses 20 are different from each other.

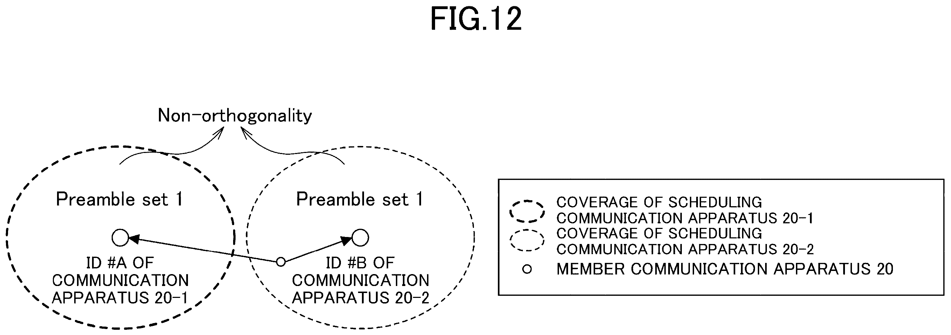

In this case, as illustrated in Fig. 12, the member communication apparatus 20 may be associated with two adjacent scheduling communication apparatuses 20-1 and 20-2. The member communication apparatus 20 may be unable to recognize which scheduling communication apparatus 20 of two scheduling communication apparatuses 20-1 and 20-2 is associated, and the member communication apparatus 20 may be unable to recognize how many scheduling communication apparatuses 20 are associated.

As described above, there is a need for a technique for resolving contention in a case in which, even if IDs of adjacent scheduling communication apparatus 20 are different, the same sidelink random access preambles are assigned to the adjacent scheduling communication apparatuses 20, i.e., in a case in which the contention of the sidelink random access preambles occurs.

### (Solution Method A)

As a method for resolving the above-described contention, a method can be considered such that, since IDs of the adjacent scheduling communication apparatuses 20 are different, information indicating identification information (identification: ID) of the scheduling communication apparatus 20 is exchanged between the scheduling communication apparatus 20 and the member communication apparatus 20. Namely, the scheduling communication apparatus 20 transmits, to the member communication apparatus 20, a notification of information indicating the ID of the scheduling communication apparatus 20.

### (Option 1)

An option 1 is a method in which an additional step of transmitting a notification of the information indicating the ID of the scheduling communication apparatus 20 is further provided in the example of the random access procedure of the sidelink communication, illustrated in Fig. 11.

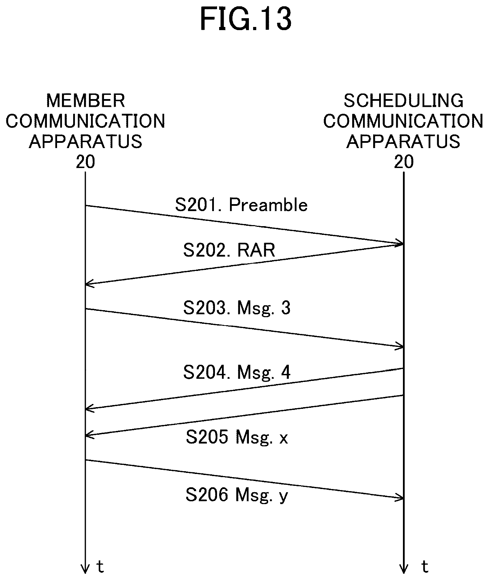

Fig. 13 is a diagram illustrating an example of the method of the option 1. In the example illustrated in Fig. 13, Step S205 for transmitting a message x and Step S206 for transmitting a message y are added to the example of the random access procedure of the sidelink communication illustrated in Fig. 11.

In the example illustrated in Fig. 13, Step S201 to Step S204 are the same as Step S101 to Step S104 in the example of the random access procedure of the sidelink communication illustrated in Fig. 11.

In Step S205 illustrated in Fig. 13, a notification of the information indicating the ID of the scheduling communication apparatus 20 is transmitted to the member communication apparatus 20 from the scheduling communication apparatus 20, as the message x. The message x of Step S205 may be transmitted through the PSCCH, or may be transmitted through the PSSCH, similar to the transmission of the RAR in Step S102 or the transmission of the Message4 in Step S104 in the example of the random access procedure of the sidelink communication illustrated in Fig. 11.

In Step S206 illustrated in Fig. 13, the member communication apparatus 20 may transmit, to the scheduling communication apparatus 20, the information indicating the ID of the scheduling communication apparatus 20 selected by the member communication apparatus 20 as the message y (the information indicating the scheduling communication apparatus 20 that is selected by the member communication apparatus 20 is fed back to the scheduling communication apparatus 20). For transmitting the message y in step S206, the member communication apparatus 20 may transmit the message y to the scheduling communication apparatus 20 by using the PSSCH resource specified by the message x that is received in Step S205. Note that, Step S205 and/or Step S206 may be performed somewhere between Step S201 to Step S204.

### (Option 2)

An option 2 is a method of transmitting a notification of the ID of the scheduling communication apparatus 20 in a step of the plurality of steps illustrated in Fig. 11, without providing additional step to the example of the random access procedure of the sidelink communication illustrated in Fig. 11.

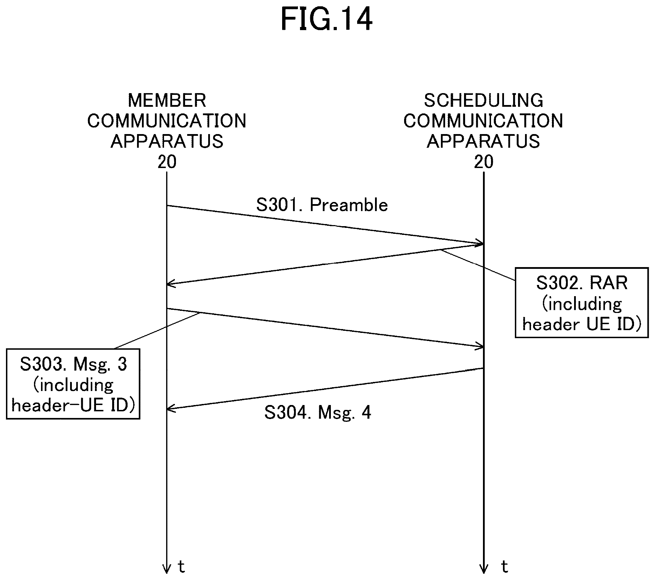

Fig. 14 is a diagram illustrating an example of the method of Option 2. In the example illustrated in Fig. 14, the information indicating the ID of the scheduling communication apparatus 20 is included in the RAR of Step S302 corresponding to Step S102 in the example of the random access procedure of the sidelink communication illustrated in Fig. 11. In addition, the information indicating the ID of the scheduling communication apparatus 20 that is selected by the member communication apparatus 20 is included in the Message3 of Step S303 corresponding to Step S103 in the example of the random access procedure of the sidelink communication illustrated in Fig. 11 (the information indicating the scheduling communication apparatus 20 that is selected by the member communication apparatus 20 is fed back to the scheduling communication apparatus 20).

In the example illustrated in Fig. 14, Step S301 and Step S304 are the same as Step S101 and Step S104 in the example of the random access procedure of the sidelink communication illustrated in Fig. 11.

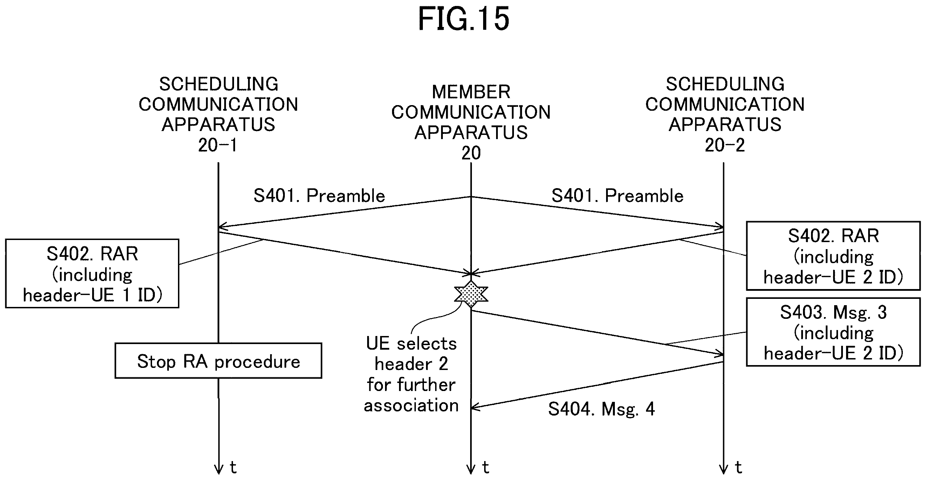

Fig. 15 is a diagram illustrating an example in which the member communication apparatus 20 selects the scheduling communication apparatus 20 that is to be associated.

As the assumption of Fig. 15, as illustrated in Fig. 12, a situation is assumed in which the scheduling communication apparatus 20-1 and the scheduling communication apparatus 20-2 are adjacent to each other in the vicinity of the member communication apparatus 20.

First, in Step S401, the member communication apparatus 20 transmits a sidelink random access preamble. The sidelink random access preamble that is transmitted from the member communication apparatus 20 is received by the scheduling communication apparatus 20-1 and the scheduling communication apparatus 20-2 that are adjacent to each other.

In Step S402, the scheduling communication apparatus 20-1 transmits the RAR including the information indicating the ID of the scheduling communication apparatus 20-1 to the member communication apparatus 20, and the scheduling communication apparatus 20-2 transmits the RAR including the information indicating the ID of the scheduling communication apparatus 20-2 to the member communication apparatus 20.

In Step S403, the member communication apparatus 20 that receives the RARs from the scheduling communication apparatus 20-1 and the scheduling communication apparatus 20-2, for example, selects the scheduling communication apparatus 20-2, as the scheduling communication apparatus 20 that is to be associated, and transmits the Message3 including the information indicating the ID of the scheduling communication apparatus 20-2 to the scheduling communication apparatus 20-2. In Step S404, the member communication apparatus 20 receives the Message4 that is transmitted from the scheduling communication apparatus 20-2.

Note that, the scheduling communication apparatus 20-1 that does not receive the Message3 in Step S403 stops the random access procedure of the sidelink communication, in response to not receiving the Message3 from the member communication apparatus 20 until a predetermined time has elapsed after the RAR is transmitted in Step S402.

As illustrated in the example of Fig. 15, when the member communication apparatus 20 that starts the random access procedure of the sidelink communication in order to establish an association with the scheduling communication apparatus 20 receives the information indicating the ID of the scheduling communication apparatus 20 from each scheduling communication apparatus 20 of the plurality of scheduling communication apparatuses 20, the member communication apparatus 20 may select one or more IDs of one or more scheduling communication apparatuses 20 to be associated from the plurality of received IDs. Subsequently, the member communication apparatus 20 may feedback one or more signal to one or more scheduling communication apparatuses 20 to be associated. In the one or more signals, the information indicating the one or more IDs of the scheduling communication apparatuses 20 may be included. The scheduling communication apparatus 20 of the plurality of scheduling communication apparatuses 20 that detects that the feedback signal from the member communication apparatus 20 does not include the information indicating the ID of the scheduling communication apparatus 20 or that is unable to detect the feedback signal from the member communication apparatus 20 may stop the association procedure, that is, the random access procedure of the sidelink communication.

### (Solution Method B)

In the following, another method of resolving the above-described contention is described. For example, as illustrated in Step S101 of Fig. 11, in a case where the member communication apparatus 20 receives a plurality of RARs after transmitting a random access preamble via sidelink, the member communication apparatus 20 transmits the Message 3 by selecting one or more PSSCH resources from the plurality of PSSCH resources specified by the received plurality of RARs.

In such a case, selecting which PSSCH resource in the plurality of PSSCH resources may depend on the implementation of the member communication apparatus 20. For example, the member communication apparatus 20 may select a PSSCH resource of the plurality of PSSCH resources, based on the measurement of a received strength of the RAR, and the like. Alternatively, the member communication apparatus 20 may select a PSSCH resource of the plurality of PSSCH resources, based on a preconfiguration.

In a case where the scheduling communication apparatus 20 that transmits an RAR of the plurality of RARs receives the Message3 with the specified PSSCH resource, the scheduling communication apparatus 20 transmits the Message4 illustrated in Step S104 of Fig. 11 to the member communication apparatus 20. When the scheduling communication apparatus 20 that transmits an RAR from the plurality of RARs does not receive the Message3 with the specified PSSCH resource, or when the scheduling communication apparatus 20 that transmits an RAR from the plurality of RARs receives the Message3 with the PSSCH resource specified by another scheduling communication apparatus, the scheduling communication apparatus 20 stops the random access procedure of the sidelink communication.

### (Device configuration)

Next, a functional configuration example of each of the base station 10 and the communication apparatus 20 that execute the processes and the operation described so far is described.

### <Base station 10>

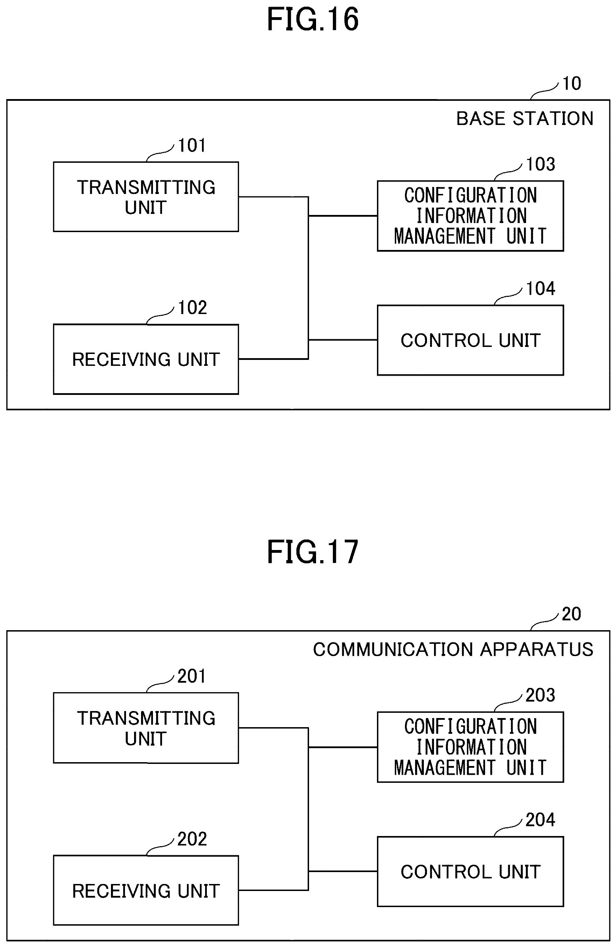

Fig. 16 is a diagram illustrating an example of a functional configuration of the base station 10. As illustrated in Fig. 16, the base station 10 includes a transmitting unit 101, a receiving unit 102, a configuration information management unit 103, and a control unit 104. The functional configuration illustrated in Fig. 16 is only an example. As long as the operation according to the embodiments can be executed, the functional division and the name of the functional unit may be any division and name. Furthermore, the transmitting unit 101 may be referred to as a transmitter, and the receiving unit 102 may be referred to as a receiver.

The transmitting unit 101 has a function of generating a signal to be transmitted to the communication apparatus 20 side and transmitting the signal wirelessly. The receiving unit 102 has a function of receiving various types signals transmitted from the communication apparatus 20 and acquiring, for example, information of an upper layer from the received signals. Furthermore, the receiving unit 102 has a function of measuring the received signal and acquiring a quality value.

The configuration information management unit 103 stores pre-configured configuration information, configuration information received from the communication apparatus 20, and the like. Furthermore, configuration information related to transmission may be stored in the transmitting unit 101, and configuration information related to reception may be stored in the receiving unit 102. The control unit 104 controls the base station 10. The function of the control unit 104 related to transmission may be included in the transmitting unit 101, and the function of the control unit 104 related to reception may be included in the receiving unit 102.

For example, information indicating a configuration of a resource pool may be included in the configuration information management unit 103. For example, when a resource pool to be shared among the communication apparatuses 20 within a group is to be configured, the control unit 104 may read out information indicating a configuration of the resource pool to be configured from the configuration information management unit 103, and the control unit 104 may include the information in a signal to be transmitted by the transmitting unit 101. Furthermore, for example, when resource pools are individually configured for the communication apparatuses 20 within a group, the control unit 104 may read out from the configuration information management unit 103 information indicating the configurations of the resource pools to be individually configured for the communication apparatuses 20, and the control unit 104 may include the information in a signal to be transmitted by the transmitting unit 101.

### <Communication apparatus 20>

Fig. 17 is a diagram illustrating an example of a functional configuration of the communication apparatus 20. As illustrated in Fig. 17, the communication apparatus 20 includes a transmitting unit 201, a receiving unit 202, a configuration information management unit 203, and a control unit 204. The functional configuration illustrated in Fig. 17 is only an example. As long as the operation according to the embodiments can be executed, the functional division and the name of the functional unit nay be any division and name. Furthermore, the transmitting unit 201 may be referred to as a transmitter, and the receiving unit 202 may be referred to as a receiver. Furthermore, the communication apparatus 20 may be the communication apparatus 20A on the transmission side or the communication apparatus 20B on the reception side. Furthermore, the communication apparatus 20 may be a scheduling communication apparatus 20.

The transmitting unit 201 generates a transmission signal from transmission data and transmits the transmission signal wirelessly. The receiving unit 202 wirelessly receives various types of signals, and acquires a signal of an upper layer from the received signal of the physical layer. Furthermore, the receiving unit 202 has a function of measuring the received signal and acquiring a quality value.

The configuration information management unit 203 stores pre-configured configuration information, configuration information received from the base station 10, and the like. Furthermore, configuration information related to transmission may be stored in the transmitting unit 201, and configuration information related to reception may be stored in the receiving unit 202. The control unit 204 controls the communication apparatus 20. Furthermore, the function of the control unit 204 related to transmission may be included in the transmitting unit 201, and the function of the control unit 204 related to reception may be included in the receiving unit 202.

In a case where the communication apparatus 20 is the scheduling communication apparatus 20, the receiving unit 202 receives the information indicating the configuration of the resource pool that is configured by the base station 10 for the communication apparatus 20 in the group by receiving a higher layer signal, such as the RRC signaling from the base station 10. In addition, in a case where the communication apparatus 20 is the scheduling communication apparatus 20, the control unit 204 may schedule a data transmission by a member communication apparatus in the group. Furthermore, in a case where the communication apparatus 20 is a member communication apparatus 20 in the group, the receiving unit 202 receives scheduling information transmitted from the scheduling communication apparatus 20, and the transmitting unit 201 transmits data in accordance with the scheduling information.

In addition, in a case where the communication apparatus 20 is the scheduling communication apparatus 20, the receiving unit 202 receives the sidelink random access preamble that is transmitted from the member communication apparatus 20. The control unit 204 generates SCI including information for specifying a resource for the member communication apparatus 20 to transmit the PSSCH signal, in response to receiving the sidelink random access preamble by the receiving unit 202, and generates the RAR by scrambling the generated SCI with the RA-RNTI. The transmitting unit 201 transmits a signal including the RAR. In addition, the receiving unit 202 receives the Message3 that is transmitted from the member communication apparatus 20 via the sidelink, the control unit 204 generates the Message4 that is the contention resolution message, and the transmitting unit 201 transmits a signal including the Message4 to the member communication apparatus 20.

In addition, in a case where the communication apparatus 20 is the member communication apparatus 20, the receiving unit 202 receives the RAR that is transmitted from the scheduling communication apparatus 20. The control unit 204 identifies the PSSCH resource for transmitting the Message3, based on the SCI included in the RAR, and the transmitting unit 201 transmits the signal including the Message3 to the scheduling communication apparatus 20 via the sidelink. Furthermore, the receiving unit 202 receives the Message4 that is transmitted from the scheduling communication apparatus 20.

In addition, in a case where the communication apparatus 20 is the scheduling communication apparatus 20, the transmitting unit 201 may transmit the signal including the Message4, and then, the control unit 204 may generate the message x that is the information indicating the ID of the scheduling communication apparatus 20, and the transmitting unit 201 may transmit a signal including the message x to the member communication apparatus 20. In a case where the receiving unit 202 of the member communication apparatus 20 receives the signal including the message x that is transmitted from the scheduling communication apparatus 20, the control unit 204 of the member communication apparatus 20 may select the ID of the scheduling communication apparatus 20 that is to be associated, from the received one or more IDs including the ID of the scheduling communication apparatus 20, and may generate the message y, and the transmitting unit 201 may transmit a signal including the message y.

In addition, in a case where the communication apparatus 20 is the scheduling communication apparatus 20, the control unit 204 may generate the RAR including the ID of the scheduling communication apparatus 20, in response to receiving the sidelink random access preamble by the receiving unit 202, and the transmitting unit 201 may transmit the signal including the RAR to the member communication apparatus 20. Upon receiving the RAR including the ID of the scheduling communication apparatus 20 by the receiving unit 202 of the member communication apparatus 20, the control unit 204 of the member communication apparatus generates the Message3 including the ID of the scheduling communication apparatus 20 that is to be associated, and the transmitting unit 201 transmits the signal including the Message3.

Note that, in a case where the communication apparatus 20 is the member communication apparatus 20, in response to receiving the plurality of RARs including the IDs of the plurality of scheduling communication apparatuses 20 by the receiving unit 202 from the plurality of scheduling communication apparatuses 20, the control unit 204 selects the ID of the scheduling communication apparatus 20 that is to be associated, and generates the Message3 including the ID, and the transmitting unit 201 transmits the signal including the Message3 to the scheduling communication apparatus 20 that is to be associated.

In a case where the communication apparatus 20 is the scheduling communication apparatus 20, and the receiving unit 202 does not receive the Message3 from the member communication apparatus 20 until a predetermined time has elapsed after the transmitting unit 201 transmits the RAR, the control unit 204 stops the random access procedure of the sidelink communication.

In addition, in a case where the communication apparatus 20 is the member communication apparatus 20, in response to receiving the plurality of RARs by the receiving unit 202, the control unit 204 selects a PSSCH resource of the plurality of PSSCH resources specified by the received plurality of RARs, and the transmitting unit 201 transmits the Message3 by using the selected PSSCH resource. In a case where the transmitting unit 201 of the scheduling communication apparatus 20 transmits the RAR, and the receiving unit 202 of the scheduling communication apparatus 20 does not receive the Message3 with the PSSCH resource specified in the RAR, the control unit 204 of the scheduling communication apparatus 20 stops the random access procedure of the sidelink communication.

### <Hardware configuration>

The block diagrams (FIG. 16 and FIG. 17) used for the description of the above embodiments illustrate blocks of functional units. These functional blocks (components) are implemented by any combination of at least one of hardware and software. In addition, the implementation method of each functional block is not particularly limited. That is, each functional block may be implemented using a single device that is physically or logically combined, or may be implemented by directly or indirectly connecting two or more devices that are physically or logically separated (e.g., using wire, radio, etc.) and using these multiple devices. The functional block may be implemented by combining software with the above-described one device or the above-described plurality of devices. Functions include, but are not limited to, judgment, decision, determination, computation, calculation, processing, derivation, research, search, verification, reception, transmission, output, access, resolution, choice, selection, establishment, comparison, assumption, expectation, deeming, broadcasting, notifying, communicating, forwarding, configuring, reconfiguring, allocating, mapping, assigning, and the like. For example, a functional block (component) that functions to transmit is called a transmitting unit or a transmitter. In either case, as described above, the implementation method is not particularly limited.

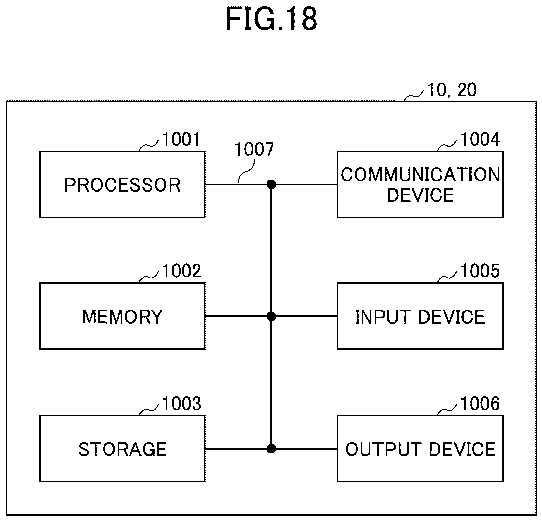

For example, the communication apparatus 20 and the base station 10 in an embodiment of the present invention may function as a computer for performing a process of the embodiments. Fig. 18 is a diagram illustrating an example of a hardware configuration of the communication apparatus 20 and the base station 10 according to an embodiment. Each of the communication apparatus 20 and the base station 10 described above may be physically configured as a computer device including a processor 1001, a memory 1002, a storage 1003, a communication apparatus 1004, an input device 1005, an output device 1006, a bus 1007, and the like.

In the following description, the term "device" can be replaced with a circuit, device, unit, or the like. The hardware configuration of each of the communication apparatus 20 and the base station 10 may be configured to include one or more of devices represented by 1001 through 1006, which are depicted, or may be configured without including some devices.

Each function in each of the communication apparatus 20 and the base station 10 is implemented such that predetermined software (program) is read on hardware such as the processor 1001, the memory 1002 and the like, and the processor 1001 performs an operation and controls communication by the communication apparatus 1004 and at least one of reading and writing of data in the memory 1002 and the storage 1003.

For example, the processor 1001 operates an operating system and controls the entire computer. The processor 1001 may be configured with a central processing unit (CPU) including an interface with a peripheral device, a control device, an operation device, a register, and the like.

Furthermore, the processor 1001 reads a program (program code), a software module, data, or the like from at least one of the storage 1003 and the communication apparatus 1004 out to the memory 1002, and executes various types of processes according to them. A program causing a computer to execute at least some of the operations described in the above embodiments is used as the program. For example, the control unit 204 of the communication apparatus 20 may be implemented by a control program which is stored in the memory 1002 and operates on the processor 1001, and another functional block may be implemented similarly. Various types of processes are described to be executed by one processor 1001 but may be executed simultaneously or sequentially by two or more processors 1001. The processor 1001 may be implemented by one or more chips. The program may be transmitted from a network via an electric communication line.

The memory 1002 is a computer readable recording medium and configured with at least one of a read only memory (ROM), an erasable programmable ROM (EPROM), an electrically erasable programmable ROM (EEPROM), a random access memory (RAM), and the like. The memory 1002 may also be referred to as a "register," a "cache," a "main memory," or the like. The memory 1002 can store programs (program codes), software modules, or the like which are executable for carrying out the radio communication method according to an embodiment of the present disclosure.

The storage 1003 is a computer-readable recording medium and may be configured with, for example, at least one of an optical disk such as a compact disc ROM (CD-ROM), a hard disk drive, a flexible disk, a magneto-optical disk (for example, a compact disk, a digital versatile disk, or a Blu-ray (registered trademark) disc, a smart card, a flash memory (for example, a card, a stick, or a key drive), a floppy (registered trademark) disk, a magnetic strip, and the like. The storage 1003 may be referred to as an auxiliary storage device. The above-described storage medium may be, for example, a database, a server, or any other appropriate medium including at least one of the memory 1002 and the storage 1003.

The communication apparatus 1004 is hardware (a transmitting and receiving device) for performing communication between computers via at least one of a wired network and a wireless network and is also referred to as a "network device," a "network controller," a "network card," a "communication module," or the like. The communication apparatus 1004 may be configured to include a high frequency switch, a duplexer, a filter, a frequency synthesizer, and the like to implement at least one of frequency division duplex (FDD) and time division duplex (TDD).

The input device 1005 is an input device that receives an input from the outside (such as a keyboard, a mouse, a microphone, a switch, a button, a sensor, or the like). The output device 1006 is an output device that performs an output to the outside (for example, a display, a speaker, an LED lamp, or the like). The input device 1005 and the output device 1006 may be integrally configured (for example, a touch panel).

The devices such as the processor 1001 and the memory 1002 are connected by the bus 1007 to communicate information with each other. The bus 1007 may be configured with a single bus or may be configured with different buses between the devices.

Furthermore, each of the communication apparatus 20 and the base station 10 may be configured to include hardware such as a microprocessor, a digital signal processor (DSP: Digital Signal Processor), an application specific integrated circuit (ASIC), a programmable logic device (PLD), or a field programmable gate array (FPGA), or all or some of the functional blocks may be implemented by the hardware. For example, the processor 1001 may be implemented by at least one of these hardware components.

### (Conclusion of the Embodiments)

In this specification, at least a communication apparatus and a communication method described below are disclosed.

A communication apparatus including a transmitting unit that transmits a random access preamble via sidelink; a receiving unit that receives a plurality of signals via the sidelink, wherein each signal of the plurality of signals includes identification information of a communication apparatus that receives the random access preamble; and a control unit that selects, from among the identification information of the plurality of communication apparatuses included in the plurality of signals, identification information of a communication apparatus to be associated with.

According to the above-described configuration, even if the sidelink random access preambles transmitted to the adjacent scheduling communication apparatuses are not orthogonal, contention can be resolved in a case in which the contention between sidelink random access preambles occurs, by selecting the identifier of the communication apparatus to be associated with, from among identification information of the plurality of communication apparatuses included in the plurality of signals transmitted from the adjacent scheduling communication apparatuses, and by transmitting the identifier with the sidelink Message3 or the like.

The plurality of signals may be received in an additional procedure in a sidelink random access procedure other than a procedure of receiving a random access response via the sidelink and a procedure of receiving a message4 via the sidelink.

The plurality of signals may be received in a procedure of receiving a random access response via the sidelink of a sidelink random access procedure.

The transmitting unit may transmit, via the sidelink, a Message3 including the identification information selected by the control unit.

A communication method executed by a communication apparatus, the method including transmitting a random access preamble via sidelink; receiving a plurality of signals via the sidelink, wherein each signal of the plurality of signals includes identification information of a communication apparatus that receives the random access preamble; and selecting, from among the identification information of the plurality of communication apparatuses included in the plurality of signals, identification information of a communication apparatus to be associated with.

According to the above-described configuration, even if the sidelink random access preambles transmitted to the adjacent scheduling communication apparatuses are not orthogonal, contention can be resolved in a case in which the contention between sidelink random access preambles occurs, by selecting the identifier of the communication apparatus to be associated with, from among identification information of the plurality of communication apparatuses included in the plurality of signals transmitted from the adjacent scheduling communication apparatuses, and by transmitting the identifier with the sidelink Message3 or the like.

### (Supplemental embodiment)

The embodiments of the present invention are described above, but the disclosed invention is not limited to the above-described embodiments, and those skilled in the art would understand various modified examples, revised examples, alternative examples, substitution examples, and the like. In order to facilitate understanding of the invention, specific numerical value examples are used for description, but the numerical values are merely examples, and certain suitable values may be used unless otherwise stated. The classification of items in the above description is not essential to the present invention. Matters described in two or more items may be combined and used if necessary, and a matter described in one item may be applied to a matter described in another item (unless inconsistent). The boundary between functional units or processing units in a functional block diagram does not necessarily correspond to the boundary between physical parts. Operations of a plurality of functional units may be performed physically by one component, or an operation of one functional unit may be physically performed by a plurality of parts. In the processing procedure described in the embodiments, the order of the processes may be changed as long as there is no contradiction. For the sake of convenience of processing description, the communication apparatus 20 and the base station 10 are described using the functional block diagrams, but such devices may be implemented by hardware, software, or a combination thereof. Software executed by the processor included in the communication apparatus 20 according to the embodiments of the present invention and software executed by the processor included in the base station 10 according to the embodiments of the present invention may be stored in a random access memory (RAM), a flash memory, a read only memory (ROM), an EPROM, an EEPROM, a register, a hard disk (HDD), a removable disk, a CD-ROM, a database, a server, or any other appropriate storage medium.

Furthermore, a notification of information is not limited to the aspects or embodiments described in the present disclosure and may be provided by any other method. For example, the notification of information may be provided by physical layer signaling (for example, downlink control information (DCI) or uplink control information (UCI)), upper layer signaling (for example, radio resource control (RRC) signaling, medium access control (MAC) signaling, broadcast information (master information block (MIB), system information block (SIB)), other signals, or a combination thereof. Furthermore, the RRC signaling may be referred to as an RRC message and may be, for example, an RRC connection setup message, an RRC connection reconfiguration message, or the like.

Each aspect and embodiment described in the present disclosure may be applied to at least one of Long Term Evolution (LTE), LTE-advanced (LTE-A), SUPER 3G, IMT-advanced, 4th generation mobile communication system (4G), 5th generation mobile communication system (5G), Future Radio Access (FRA), new Radio (NR), W-CDMA (registered trademark), GSM (registered trademark), CDMA 2000, Ultra Mobile Broadband (UMB), IEEE 802.11 (Wi-Fi(registered trademark)), IEEE 802.16 (WiMAX(registered trademark)), IEEE 802.20, Ultra-WideBand (UWB), Bluetooth (registered trademark), a system using any other appropriate system, and next generation systems extended based on these standards. Furthermore, a plurality of systems (e.g., a combination of at least one of LTE and LTE-A with 5G) may be combined to be applied.

The processing procedures, the sequences, the flowcharts, and the like of the respective aspects/embodiments described in the present disclosure may be reversed in order provided that there is no contradiction. For example, the method described in the present disclosure presents elements of various steps with an exemplary order and is not limited to a presented specific order.

In the present disclosure, a specific operation to be performed by the base station 10 may be performed by an upper node in some cases. In the network including one or more network nodes including the base station 10, various operations performed for communication with the terminal can be obviously performed by at least one of the base station 10 and any network node (for example, an MME, an S-GW, or the like is considered, but it is not limited thereto) other than the base station 10. A case is exemplified above in which there is one network node other than the base station 10. The one network node may be a combination of a plurality of other network nodes (e.g., MME and S-GW).

Input and output information and the like may be stored in a specific place (for example, a memory) or may be managed through a management table. Input and output information and the like may be overwritten, updated, or additionally written. Output information and the like may be deleted. Input information and the like may be transmitted to another device.

The determination may be performed in accordance with a value (0 or 1) indicated by one bit, may be performed in accordance with a Boolean value (Boolean: true or false), or may be performed by a comparison of numerical values (for example, a comparison with a predetermined value).

Each aspect/embodiment described in the present disclosure may be used alone, in combination, or may be switched in accordance with the execution. Further, notification of predetermined information (for example, notification of "being X") is not limited to being performed explicitly, but may be performed implicitly (for example, not notifying the predetermined information).

Software can be interpreted widely to mean a command, a command set, a code, a code segment, a program code, a program, a subprogram, a software module, an application, a software application, a software package, a routine, a subroutine, an object, an executable file, an execution thread, a procedure, a function, and the like regardless of whether software is called software, firmware, middleware, a microcode, a hardware description language, or any other name.

Furthermore, software, commands, information, and the like may be transmitted and received via a transmission medium. For example, when software is transmitted from a web site, a server, or any other remote source using a wired technology (such as a coaxial cable, a fiber optic cable, a twisted pair, or a digital subscriber line (DSL: Digital Subscriber Line)) and a radio technology (such as infrared rays or a microwave), at least one of the wired technology and the radio technology are included in a definition of a transmission medium.

Information, signals, and the like described in this disclosure may be indicated using any one of a variety of different techniques. For example, data, instructions, commands, information, signals, bits, symbols, chips, and the like which are mentioned throughout the above description may be indicated by voltages, currents, electromagnetic waves, magnetic particles, optical fields or photons, or any combination thereof.

The terms described in the present disclosure and terms necessary for understanding the present disclosure may be replaced with terms having the same or similar meanings. For example, at least one of a channel and a symbol may be a signal. Further, a signal may be a message.

The terms "system" and "network" used in the present disclosure are used interchangeably. Further, information, parameters, and the like described in the present disclosure may be indicated by absolute values, may be indicated by relative values from predetermined values, or may be indicated by corresponding other information. For example, radio resources may be those indicated by an index.

The names used for the above-described parameters are not limited in any respect. Further, mathematical formulas or the like using the parameters may be different from those explicitly disclosed in the present disclosure. Since various channels (for example, a PUCCH, a PDCCH, and the like) and information elements can be identified by suitable names, various names assigned to the various channels and the information elements are not limited in any respect.

In the present disclosure, the terms "base station (BS: Base Station)," "radio base station," "fixed station," "Node B," "eNode B (eNB)," "gNodeB (gNB)," "access point," "transmission point," "reception point," "transmission/reception point," "cell," "sector," "cell group," "carrier," "component carrier," and the like can be used interchangeably. The base stations may also be indicated by terms such as a macrocell, a small cell, a femtocell, and a picocell.

The base station eNB can accommodate one or more (for example, three) cells. In a case in which the base station accommodates a plurality of cells, the entire coverage area of the base station can be partitioned into a plurality of small areas, and each small area can provide a communication service through a base station subsystem (for example, a small indoor base station (a remote radio head (RRH)). The term "cell" or "sector" refers to the whole or a part of the coverage area of at least one of the base station and the base station subsystem that performs a communication service in the coverage.

In the present disclosure, the terms "mobile station (MS)," "user terminal," "user equipment (UE)," "terminal," and the like can be used interchangeably.

The mobile station may be referred to, by a person ordinarily skilled in the art, as a subscriber station, a mobile unit, a subscriber unit, a wireless unit, a remote unit, a mobile device, a wireless device, a wireless communication apparatus, a remote device, a mobile subscriber station, an access terminal, a mobile terminal, a wireless terminal, a remote terminal, a handset, a user agent, a mobile client, a client, or some other suitable terms.

At least one of the base station and the mobile station may be also referred to as a transmitting device, a receiving device, a communication apparatus, or the like. At least one of the base station and the mobile station may be a device installed in a mobile body, a mobile body itself, or the like. The mobile body may be a vehicle (for example, a car, an airplane, or the like), an unmanned body that moves (for example, a drone, an autonomous car or the like), or a robot (manned type or unmanned type). At least one of the base station and the mobile station includes a device which need not move during a communication operation. For example, at least one of the base station and the mobile station may be an Internet of things (IoT) device such as a sensor.

Further, the base station in the present disclosure may be replaced with a user terminal. For example, each aspect/embodiment of the present disclosure may be applied to a configuration in which communication between the base station and the user terminal is replaced with communication between a plurality of terminals (for example, which may be referred to as device-to-device (D2D) or vehicle-to-everything (V2X)). In this case, the user terminal 20 may have the functions of the base station 10 described above. Further, the terms "uplink" and "downlink" may be replaced with terms (for example, "side") corresponding to inter-terminal communication. For example, an uplink channel, a downlink channel, or the like may be replaced with side channels. Similarly, the user terminal in the present disclosure may be replaced with the base station. In this case, the base station 10 may have the functions of the above-mentioned user terminal 20.

Terms "connected," "coupled," or variations thereof means any direct or indirect connection or coupling between two or more elements and may include the presence of one or more intermediate elements between two elements which are "connected" or "coupled." The coupling or the connection between the elements may be physical, logical, or a combination thereof. For example, "connection" may be replaced with "access." In a case in which used in the present disclosure, two elements may be considered to be "connected" or "coupled" with each other using at least one of one or more electric wires, cables and/or a printed electrical connection or using electromagnetic energy having a wavelength in a radio frequency domain, a microwave region, or a light (both visible and invisible) region as non-limiting and non-exhaustive examples.

A reference signal may be abbreviated as RS and may be referred to as a pilot, depending on a standard to be applied.

A phrase "based on" used in the present disclosure is not limited to "based only on" unless otherwise stated. In other words, a phrase "based on" means both "based only on" and "based on at least."

In a case in which "include," "including," and variations thereof are used in the present disclosure, these terms are intended to be comprehensive, similar to a term "provided with (comprising)." Further, the term "or" used in the present disclosure is intended not to be an exclusive OR.

In the present disclosure, for example, when an article such as **"a,"** "an," or "the" in English is added by a translation, the present disclosure may include a case in which a noun following the article is the plural.

In the present disclosure, a term "A and B are different" may mean "A and B are different from each other." Furthermore, the term may mean "each of A and B is different from **C."** Terms such as "separated," "coupled," or the like may also be interpreted in similarly to "different."

### LIST OF REFERENCE SYMBOLS

- 10: base station
- 20: communication apparatus
- 101: transmitting unit
- 102: receiving unit
- 103: configuration information management unit
- 104: control unit
- 201: transmitting unit
- 202: receiving unit
- 203: configuration information management unit
- 204: control unit
- 1001: processor
- 1002: memory
- 1003: storage
- 1004: communication apparatus
- 1005: input device
- 1006: output device

## Claims

1. A communication apparatus (20) comprising:
a transmitting unit (201) configured to transmit a random access preamble via sidelink;
a receiving unit (202) configured to receive a plurality of signals via the sidelink, wherein each signal of the plurality of signals includes identification information of one of a plurality of communication apparatuses (20-1, 20-2) configured to receive the random access preamble; and
a control unit (204) configured to select, from among the identification information of the plurality of communication apparatuses (20-1, 20-2) included in the plurality of signals, identification information of a communication apparatus to be associated with (20-2),
wherein the plurality of signals is received in an additional procedure in a sidelink random access procedure other than a procedure of receiving a random access response via the sidelink and a procedure of receiving a Message4 via the sidelink.

2. The communication apparatus (20) according to claim 1, wherein the transmitting unit (201) is configured to transmita message including the identification information selected by the control unit (204) in a procedure in the sidelink random access procedure other than a procedure of transmitting a Message3 via the sidelink.

3. A communication method executed by a communication apparatus (20), the method comprising:
transmitting a random access preamble via sidelink;
receiving a plurality of signals via the sidelink, wherein each signal of the plurality of signals includes identification information of one of a plurality of communication apparatuses (20-1, 20-2) configured to receive the random access preamble; and
selecting, from among the identification information of the plurality of communication apparatuses (20-1, 20-2) included in the plurality of signals, identification information of a communication apparatus to be associated with (20-2),
wherein the plurality of signals is received in an additional procedure in a sidelink random access procedure other than a procedure of receiving a random access response via the sidelink and a procedure of receiving a Message4 via the sidelink.

## Patentansprüche

1. Kommunikationseinrichtung (20), umfassend:
eine Sendeeinheit (201), die so konfiguriert ist, dass sie eine Zufallszugriffspräambel über einen Sidelink sendet;
eine Empfangseinheit (202), die so konfiguriert ist, dass sie eine Vielzahl von Signalen über den Sidelink empfängt, wobei jedes Signal der Vielzahl von Signalen Identifikationsinformationen einer von einer Vielzahl von Kommunikationseinrichtungen (20-1, 20-2) einschließt, die so konfiguriert sind, dass sie die Zufallszugriffspräambel empfangen; und
eine Steuereinheit (204), die so konfiguriert ist, dass sie aus den Identifikationsinformationen der Vielzahl von Kommunikationseinrichtungen (20-1, 20-2), die in der Vielzahl von Signalen eingeschlossen sind, Identifikationsinformationen einer zuzuordnenden Kommunikationseinrichtung (20-2) auswählt,
wobei die Vielzahl von Signalen in einem zusätzlichen Vorgang in einem Sidelink-Zufallszugriffsvorgang empfangen wird, der sich von einem Vorgang zum Empfangen einer Zufallszugriffsantwort über den Sidelink und einem Vorgang zum Empfangen einer Message4 über den Sidelink unterscheidet.

2. Kommunikationseinrichtung (20) nach Anspruch 1, wobei die Sendeeinheit (201) so konfiguriert ist, dass sie eine Nachricht sendet, die die von der Steuereinheit (204) ausgewählten Identifikationsinformationen in einem Vorgang in dem Sidelink-Zufallszugriffsvorgang einschließt, das sich von einem Vorgang zum Senden einer Message3 über den Sidelink unterscheidet.

3. Kommunikationsverfahren, das von einer Kommunikationseinrichtung (20) ausgeführt wird, wobei das Verfahren umfasst:
Senden einer Zufallszugriffspräambel über einen Sidelink;
Empfangen einer Vielzahl von Signalen über den Sidelink, wobei jedes Signal der Vielzahl von Signalen Identifikationsinformationen einer von einer Vielzahl von Kommunikationseinrichtungen (20-1, 20-2) einschließt, die zum Empfangen der Zufallszugriffspräambel konfiguriert sind; und
Auswählen, aus den Identifikationsinformationen der Vielzahl von Kommunikationseinrichtungen (20-1, 20-2), die in der Vielzahl von Signalen eingeschlossen sind, von Identifikationsinformationen einer zuzuordnenden Kommunikationseinrichtung (20-2),
wobei die Vielzahl von Signalen in einem zusätzlichen Vorgang in einem Sidelink-Zufallszugriffsvorgang empfangen wird, der sich von einem Vorgang zum Empfangen einer Zufallszugriffsantwort über den Sidelink und einem Vorgang zum Empfangen einer Message4 über den Sidelink unterscheidet.

## Revendications

1. Dispositif de communication (20) comprenant :
une unité de transmission (201) configurée pour transmettre un préambule d'accès aléatoire dans une liaison latérale ;
une unité de réception (202) configurée pour recevoir une pluralité de signaux dans la liaison latérale, dans laquelle chaque signal de la pluralité de signaux inclut des informations d'identification de l'un d'une pluralité de dispositifs de communication (20-1, 20-2) configurés pour recevoir le préambule d'accès aléatoire ; et
une unité de commande (204) configurée pour sélectionner des informations d'identification d'un dispositif de communication (20-2), parmi les informations d'identification de la pluralité de dispositifs de communication (20-1, 20-2) inclus dans la pluralité de signaux, auxquels s'associer,
dans lequel la pluralité de signaux est reçue dans une procédure supplémentaire dans une procédure d'accès aléatoire en liaison latérale autre qu'une procédure de réception d'une réponse d'accès aléatoire dans la liaison latérale et une procédure de réception d'un Message4 dans la liaison latérale.

2. Dispositif de communication (20) selon la revendication 1, dans lequel l'unité de transmission (201) est configurée pour transmettre un message incluant les informations d'identification sélectionnées par l'unité de commande (204) dans une procédure dans la procédure d'accès aléatoire en liaison latérale autre qu'une procédure de transmission d'un Message3 dans la liaison latérale.

3. Procédé de communication exécuté par un dispositif de communication (20), le procédé comprenant :
la transmission d'un préambule d'accès aléatoire dans une liaison latérale ;
la réception d'une pluralité de signaux via la liaison latérale, dans laquelle chaque signal de la pluralité de signaux inclut des informations d'identification de l'un d'une pluralité de dispositifs de communication (20-1, 20-2) configurés pour recevoir le préambule d'accès aléatoire ; et
la sélection d'informations d'identification d'un dispositif de communication (20-2), parmi les informations d'identification de la pluralité de dispositifs de communication (20-1, 20-2) inclus dans la pluralité de signaux,
auxquels s'associer,
dans lequel la pluralité de signaux est reçue dans une procédure supplémentaire dans une procédure d'accès aléatoire en liaison latérale autre qu'une procédure de réception d'une réponse d'accès aléatoire dans la liaison latérale et une procédure de réception d'un Message4 dans la liaison latérale.
